# EUROPÄISCHE PATENTSCHRIFT

(11) **EP 3 921 539 B1**
(45) Veröffentlichungstag und Bekanntmachung des Hinweises auf die Patenterteilung: **20.12.2023**
(21) Anmeldenummer: 20705626.8
(22) Anmeldetag: 06.02.2020
(51) Int. Cl.: F03D 7/04, F03D 17/00, F03D 7/02, F03D 13/30

(54) **WINDENERGIEANLAGENSCHNITTSTELLENMODUL SOWIE EIN VERFAHREN DAMIT**
WIND TURBINE INTERFACE MODULE AND A METHOD INVOLVING SAME
MODULE D'INTERFACE D'ÉOLIENNE ET PROCÉDÉ ASSOCIÉ

(30) Priorität: 08.02.2019 DE 102019103150
(43) Veröffentlichungstag der Anmeldung: 15.12.2021
(73) Patentinhaber: Wobben Properties GmbH, 26607 Aurich (DE)
(72) Erfinder: BAUMGART, Heiko, 26605 Aurich (DE); SCHRÖDER, Steve, 26605 Aurich (DE); STÜTTCHEN, Tanja, 26131 Oldenburg (DE); GROTELÜSCHEN, Janek, 26603 Aurich (DE)
(74) Vertreter: Eisenführ Speiser
(86) Internationale Anmeldenummer: PCT/EP2020/053009
(87) Internationale Veröffentlichungsnummer: WO 2020/161249

(56) Entgegenhaltungen:
- EP-A1- 1 736 664
- WO-A2-2011/104506
- US-A1- 2011 049 883

## Beschreibung

Die Erfindung betrifft den Bereich der Windenergieanlagen und hierbei insbesondere eine Vermessung einer Windenergieanlage sowie das Betreiben der Windenergieanlage bei einer Vermessung. Die Vermessung bezeichnet beispielsweise eine Schallvermessung.

Schallvermessungen für einzelne Windenergieanlagen werden in verschiedenen Ländern nach nationalen Vorschriften zur Genehmigung des Betriebs eines Windparks oder einer Windenergieanlage und auch zur Zertifizierung von neu entwickelten Windenergieanlagen durchgeführt. Eine Durchführung der Schallvermessung erfolgt in der Regel durch zertifizierte Messinstitute und unterliegen hierbei akustischen Messungen sowie Auswertungen der Messungen unter Berücksichtigung zusätzlicher Betriebsdaten der Windenergieanlage, die beispielsweise nach ISO-Normen durchgeführt werden. Bei der Auswertung wird beispielsweise eine zeitlich kohärente Betrachtung der akustischen Eigenschaften der Windenergieanlage basierend auf deren Betriebszuständen verlangt.

Für die Schallvermessung sind demnach beispielweise mit einem Mikrofon aufgenommene Schallsignale, insbesondere Schalldruckpegel und Frequenzen, im Zusammenhang mit dem aktuellen Betriebszustand, der sich beispielsweise durch Betriebsdaten, wie die aktuelle Leistung, Drehzahl und Windgeschwindigkeit, zurückführen lässt, zu sehen. Die Betriebsdaten, wie Leistung, Drehzahl und Windgeschwindigkeit, müssen demnach dem Messinstitut zur Verfügung gestellt werden. Um die Vermessung möglichst effizient zu gestalten, ist eine Änderung der Betriebszustände während der Schallvermessung gewünscht, damit die anliegenden meteorologischen Bedingungen ausgenutzt werden.

Zum Ändern der Betriebszustände sowie dem Bereitstellen der Betriebsdaten einer Windenergieanlage für die Messinstitute sind unterschiedliche Varianten bekannt. Gemäß einer ersten Variante legt der Windenergieanlagenbetreiber nach Absprache mit dem Messinstitut verschiedene vordefinierte absolute Zeiträume, beispielsweise uhrzeitabhängige Zeiträume, fest, in denen die Windenergieanlage mit unterschiedlichen Betriebszuständen betrieben wird. Das Messinstitut nimmt in diesen Zeiträumen die vorgeschriebenen Schallmessungen zusammen mit Zeitstempeln auf und erhält dann später vom Betreiber die Betriebsdaten, nämlich Messwerte der Betriebsparameter, die ebenfalls mit Zeitstempeln versehen sind, sodass das Messinstitut den zeitlichen Zusammenhang zwischen Betriebsparametern und Schallvermessung erzeugen und so eine Schallvermessungsauswertung ausführen kann.

Gemäß einer weiteren Variante wird für den Zeitraum einer Schallvermessung ein Servicemitarbeiter des Betreibers zur Verfügung gestellt, der den Zugang zur Windenergieanlage ermöglicht und so unter Anleitung des Messinstituts verschiedene Betriebszustände einstellt und das Messinstitut währenddessen die Schallvermessung durchführen kann. Vorzugsweise stellt der Servicemitarbeiter bei einem derartigen Verfahren auch einen Zugang zu einem Datenausgang für das Messinstitut bereit, um unmittelbar Messwerte der Betriebsparameter bereitzustellen, sodass eine nachträgliche Synchronisation mit den aufgenommenen Schallsignalen nicht mehr nötig ist.

Beide Varianten setzen jedoch eine sehr genaue zeitliche Planung voraus, die einen gro-ßen Aufwand einerseits für das Messinstitut und andererseits für den Betreiber darstellt. Geringe Abweichungen von der Planung durch unvorhergesehene Ereignisse können dazu führen, dass eine Schallvermessung nicht korrekt ausgeführt werden kann und zu einem anderen Zeitpunkt, beispielsweise sogar an einem anderen Tag, ein neuer Versuch für eine Schallvermessung geplant werden muss. Dies ist beispielsweise der Fall, wenn im Falle vorgegebener Zeiträume unterschiedlicher Betriebsmodi das Messinstitut durch Verzögerung bei einer vorherigen Messung oder bedingt durch eine Verkehrssituation nicht rechtzeitig am Aufstellungsort der Windenergieanlage erscheinen kann, der Servicemitarbeiter zur Steuerung der Betriebsmodi und zum Aufsperren des Zugangs zur Windenergieanlage verhindert ist oder Windbedingungen nicht den prognostizierten Windbedingungen entsprechen. Tritt beispielsweise eine unvorhergesehene Flaute ein, so können Messungen nicht vorgenommen werden. Ein Aufschub einer Schallvermessung, um einerseits eine neue Terminplanung zu ermöglichen und andererseits auch geeignete Windverhältnisse vorzufinden, kann in derartigen Fällen Tage, Wochen oder sogar Monate umfassen, sodass Genehmigungsverfahren oder Zertifizierungsverfahren verzögert werden.

In der prioritätsbegründenden deutschen Patentanmeldung hat das Deutsche Patent- und Markenamt die folgenden Dokumente recherchiert: DE 10 2011 052 894 A1, DE 10 2011 081 795 A1 und US 2011/0 049 883 A1. Weiterer Stand der Technik ist in WO 2011/104506 A2 offenbart.

Aufgabe der vorliegenden Erfindung ist es daher, eine Möglichkeit zu finden, eine Schallvermessung in einem geeigneten Zeitrahmen durchführen zu können und den Aufwand bei einer Schallvermessung zu reduzieren.

Es wird daher ein Windenergieanlagenschnittstellenmodul zum Bereitstellen einer Datenverbindung mit einer Windenergieanlagensteuerung zur Vermessung, insbesondere Schallvermessung, vorgeschlagen. Das Windenergieanlagenschnittstellenmodul umfasst eine Windenergieanlagensteuerungsschnittstelle zum Verbinden mit einer Windenergieanlagensteuerung einer Windenergieanlage. An die Windenergieanlagensteuerungsschnittstelle ist demnach eine Windenergieanlagensteuerung einer Windenergieanlage anschließbar, sodass Daten zwischen dem Windenergieanlagenschnittstellenmodul und einer Windenergieanlagensteuerung austauschbar sind. Die Windenergieanlagensteuerungsschnittstelle ist also eine Datenschnittstelle.

Weiter umfasst das Windenergieanlagenschnittstellenmodul eine Rechnereinheit mit mehreren vordefinierbaren auswählbaren Betriebsmodi der Windenergieanlage. In der Rechnereinheit sind somit mehrere Betriebsmodi der Windenergieanlage hinterlegbar oder hinterlegt, die auswählbar sind. Ein Betriebsmodus umfasst hierbei vorzugsweise jeweils einen Satz von Parametern, Betriebskennlinien oder dergleichen, um eine Windenergieanlage so zu steuern, dass diese beispielsweise bei vorgegebenem Wind eine vom Betriebsmodus abhängige Drehzahl eines aerodynamischen Rotors der Windenergieanlage einstellt und/oder eine durch den Betriebsmodus vordefinierte elektrische Energie erzeugt. Unterschiedliche Betriebsmodi zeichnen sich beispielsweise dadurch aus, dass in einem ersten Betriebsmodus die maximale dem Wind entnehmbare kinetische Energie in elektrische Energie umwandelt und in einem weiteren Betriebsmodus die Windenergieanlage reduziert betrieben wird, sodass nur ein bestimmter Prozentanteil der möglichen maximalen Energie erzeugt wird. Beispielsweise sind Betriebsmodi möglich, bei denen nur 50 oder 80 Prozent der maximal dem Wind entnehmbaren kinetischen Energie in elektrische Energie gewandelt wird. Ein Betriebsmodus gibt demnach vorzugsweise eine Leistungsdrehzahlkennlinie oder Leistungswindgeschwindigkeitskennlinie vor.

Weiter ist die Rechnereinheit eingerichtet, einen ausgewählten Betriebsmodus der auswählbaren Betriebsmodi, die in der Rechnereinheit vordefinierbar sind, an der Windenergieanlagensteuerungsschnittstelle auszugeben. Dieser Betriebsmodus wird dann entsprechend an die Windenergieanlagensteuerung ausgegeben, sodass die Windenergieanlagensteuerung die Windenergieanlage mit dem ausgegebenen Betriebsmodus steuern kann.

Außerdem umfasst das Windenergieanlagenschnittstellenmodul eine Teilnehmerschnittstelle zum Verbinden mit einem Teilnehmermodul und zum Empfangen von Daten vom verbundenen Teilnehmermodul zur Auswahl mindestens eines der auswählbaren Betriebsmodi durch das Teilnehmermodul. Weiter ist die Teilnehmerschnittstelle derart ausgebildet, dass eine Verbindung mit der Teilnehmerschnittstelle von einem Ort außerhalb einer Windenergieanlage herstellbar ist, in der das Windenergieanlagenschnittstellenmodul anordenbar ist. Vorzugsweise ist das Verhältnis zwischen Windenergieanlagenschnittstellenmodul und Teilnehmermodul als Master-Slave-Architektur ausgebildet, wobei das Windenergieanlagenschnittstellenmodul als Master und das Teilnehmermodul als Slave ausgebildet ist.

Das Windenergieanlagenschnittstellenmodul ermöglicht es somit, ein Teilnehmermodul, das sich außerhalb der Windenergieanlage befindet, mit dem Windenergieanlagenschnittstellenmodul über die Teilnehmerschnittstelle zu verbinden und einen Betriebsmodus auszuwählen, der dann über die Windenergieanlagensteuerungsschnittstelle an die Windenergieanlagensteuerung ausgegeben wird.

Dadurch, dass in der Rechnereinheit nur vordefinierte auswählbare Betriebsmodi hinterlegt sind, ist jedoch kein uneingeschränkter Steuerungszugriff auf die Windenergieanlage über das Teilnehmermodul möglich. So ist einerseits sichergestellt, dass zur Vermessung die hierfür benötigten unterschiedlichen Betriebsmodi auswählbar sind, und andererseits durch absichtliche oder versehentliche falsche Befehle die Windenergieanlage nicht in einen Betriebszustand gebracht werden kann, der diese oder daran angeschlossenen Komponenten beschädigt.

Ein Messinstitut kann somit, ohne Zugang zur Windenergieanlage selbst, beispielsweise durch eine Zugangstür, zu benötigen, eine beschränkte Variation der Betriebsmodi während einer Vermessung selbständig ausführen. Außerdem ist der Wechsel zwischen unterschiedlichen Betriebsmodi vom Messinstitut möglich, ohne dass ein Wechselzeitpunkt bzw. unterschiedliche Zeiträume für unterschiedliche Betriebsmodi vorprogrammiert sein müssen. Demnach ist es auch nicht nötig, dass ein Servicemitarbeiter des Windenergieanlagenbetreibers oder des Windenergieanlagenherstellers während der Vermessung anwesend sein muss, sodass hierdurch eine einfachere Planung und Ausführbarkeit einer Vermessung ermöglicht wird.

Gemäß einer ersten Ausführungsform umfasst die Teilnehmerschnittstelle eine Drahtlosschnittstelle, insbesondere eine WLAN-Schnittstelle. Die Drahtlosschnittstelle ist vorzugsweise so ausgebildet, dass sie ermöglicht, mit einem Teilnehmermodul verbunden zu werden, das mindestens 50, 70 oder 100 Meter vom Windenergieanlagenschnittstellenmodul entfernt anordenbar ist. Besonders bevorzugt ist die Drahtlosschnittstelle jedoch so ausgebildet, dass eine Verbindung mit dem Teilnehmermodul auch nur über eine begrenzte Entfernung hergestellt werden kann, die beispielsweise im Bereich von 200, 300 oder 500 Metern vom Windenergieanlagenschnittstellenmodul liegt. Eine Verbindung eines Teilnehmermoduls mit dem Windenergieanlagenschnittstellenmodul ist somit außerhalb dieses zuletzt genannten Bereichs bzw. der Entfernung von beispielsweise über 500 Metern nicht mehr möglich.

Hierdurch wird sichergestellt, dass zur Vermessung tatsächlich ein Teilnehmermodul vor Ort angeordnet sein muss und nicht von einem entfernten Ort auf das Windenergieanlagenschnittstellenmodul zugegriffen werden kann. Dies dient der Sicherheit, um beispielsweise sicherzustellen, dass nicht von einem entfernten Ort auf eine Vielzahl von Windenergieanlagenschnittstellenmodulen in verschiedenen Windenergieanlagen gleichzeitig zugegriffen werden kann. So wird verhindert, dass beispielsweise jede Windenergieanlage in einen der auswählbaren Betriebsmodi gebracht wird, die durch Aufsummierung der Eingriffe zur Beeinflussung der Netzstabilität führen würden.

Gemäß einer weiteren Ausführungsform umfasst die Teilnehmerschnittstelle eine Kabelverbindung mit einem an einer Außenseite der Windenergieanlage anbringbaren Steckverbinder.

Durch eine derartige Ausbildung der Teilnehmerschnittstelle ist es einerseits nicht nötig, dass ein Servicemitarbeiter zur Auswahl der Betriebsmodi durch den Windenergieanlagenbetreiber bereitgestellt werden und andererseits aber ein Zugriff durch das Messinstitut vor Ort erfolgen muss.

Gemäß der Erfindung ist in dem Windenergieanlagenschnittstellenmodul, nämlich vorzugsweise in der Rechnereinheit, mindestens ein Identifikator eines identifizierbaren Teilnehmermoduls vordefinierbar. Demnach sind Teilnehmermodule beispielsweise durch einen Identifikator identifizierbar, wobei ein oder mehrere dieser Identifikatoren im Windenergieanlagenschnittstellenmodul hinterlegt werden können. Außerdem ist das Windenergieanlagenschnittstellenmodul eingerichtet, Daten zur Auswahl eines der auswählbaren Betriebsmodus nur von einem Teilnehmermodul zu empfangen, dessen Identifikatorvordefiniert ist. Demnach weist beispielsweise jedes Teilnehmermodul, das mit dem Windenergieanlagenschnittstellenmodul verbunden werden soll, einen festen nicht veränderbaren Identifikator auf, wobei dann dieser Identifikator im Windenergieanlagenschnittstellenmodul, beispielsweise durch vorab Speichern des Identifikators, vordefiniert sein muss, um dem Teilnehmermodul zu ermöglichen, eine Verbindung mit der Teilnehmerschnittstelle herzustellen, sodass Betriebsmodi auswählbar sind.

Hierdurch ist sichergestellt, dass auf eine Windenergieanlagensteuerung mit dem Windenergieanlagenschnittstellenmodul nur durch vordefinierte Teilnehmermodule zugreifbar ist und somit ein Zugriffsschutz dargestellt wird, der verhindert, dass beliebige Teilnehmer auf die Steuerung einer Windenergieanlage Einfluss nehmen können. Besonders bevorzugt ist jedem Windenergieanlagenschnittstellenmodul nur genau ein Teilnehmermodul zugeordnet, also dieses identifizierbare Teilnehmermodul im jeweiligen Windenergieanlagenschnittstellenmodul durch seinen Identifikator vordefiniert. So kann in einer bestimmen Windenergieanlage genau einem passenden Teilnehmermodul der Zugriff auf ein Windenergieanlagenschnittstellenmodul freigegeben werden, um eine Vermessung an dieser bestimmten Windenergieanlage auszuführen. So ist sichergestellt, dass mit genau diesem Teilnehmermodul keine anderen Windenergieanlagen im Hinblick auf ihren Betriebsmodus mit genau diesem Teilnehmermodul änderbar sind. Ein Missbrauch wird somit verhindert.

Gemäß einer weiteren Ausführungsform ist die Windenergieanlagensteuerungsschnittstelle eingerichtet, eine Vielzahl von Betriebsdaten von der Windenergieanlagensteuerung zu empfangen. Die Betriebsdaten umfassen beispielsweise Messwerte, einen aktuellen Betriebsmodus oder weitere Parameter der Windenergieanlage. Weiter ist in der Rechnereinheit vordefinierbar, welche dieser empfangbaren Betriebsdaten über die Teilnehmerschnittstelle abrufbar sind. Eine Auswahl der Vielzahl von Betriebsdaten ist somit vordefinierbar. Weiter ist die Teilnehmerschnittstelle ausgebildet, die vordefinierten abrufbaren Betriebsdaten, also der Auswahl der Betriebsdaten, bei Abruf durch ein Teilnehmermodul an der Teilnehmerschnittstelle auszugeben.

Hierdurch wird ermöglicht, dass ein Messinstitut nicht nur einen Einfluss auf die Betriebsmodi der Windenergieanlage für die Vermessung ausüben kann, sondern gleichzeitig die für die Vermessung benötigten Betriebsdaten zu empfangen. Die Auswahl umfasst demnach beispielsweise aktuelle Leistung, aktuelle Drehzahl, aktuelle Windgeschwindigkeit auf Gondelhöhe und/oder die aktuelle Gondelposition. So wird berücksichtigt, dass in der Windenergieanlagensteuerung und über die Windenergieanlagensteuerungsschnittstelle im Windenergieanlagenschnittstellenmodul zwar eine Vielzahl weiterer Betriebsdaten zur Verfügung stehen, die jedoch nicht dem Messinstitut über die Teilnehmerschnittstelle bereitgestellt werden, da diese beispielsweise sensible Betriebsdaten umfassen. Diese Daten sind somit vor Fremdzugriff geschützt.

Gemäß der Erfindung umfasst das Windenergieanlagenschnittstellenmodul eine Programmierschnittstelle. Die Programmierschnittstelle kann zum Vordefinieren oder zum Ändern vordefinierter auswählbarer Betriebsmodi dienen. Zusätzlich oder alternativ kann die Programmierschnittstelle zum Bestimmen der Auswahl von Betriebsdaten, die über die Teilnehmerschnittstelle abrufbar sind, dienen. Erfindungsgemäß dient die Programmierschnittstelle zum Aktivieren oder Deaktivieren des Windenergieanlagenschnittstellenmoduls oder zumindest der Teilnehmerschnittstelle. Alternativ oder zusätzlich dient die Programmierschnittstelle erfindungsgemäß zum Vorgeben eines insbesondere von der Uhrzeit abhängigen Zeitraums für eine Aktivierung der Teilnehmerschnittstelle. Demnach ist eine, insbesondere von der Teilnehmerschnittstelle physikalisch separierte, Programmierschnittstelle bereitgestellt, um das Windenergieanlagenschnittstellenmodul, insbesondere die Rechnereinheit, zu programmieren bzw. das Windenergieanlagenschnittstellenmodul zu steuern. Die Programmierschnittstelle stellt somit die Möglichkeit dar, das Windenergieanlagenschnittstellenmodul auch während des späteren Betriebs umzuprogrammieren, um beispielsweise Anforderungen an geänderte Betriebsmodi für Vermessung Sorge zu tragen. Außerdem kann durch eine Aktivierung oder Deaktivierung des Windenergieanlagenschnittstellenmoduls, insbesondere der Teilnehmerschnittstelle, und/oder Vorgeben eines uhrzeitabhängigen Zeitraums für die Aktivierung sichergestellt werden, dass nur zu gewünschten begrenzten Zeiträumen ein Zugriff durch ein Teilnehmermodul auf das Windenergieanlagenschnittstellenmodul und somit auf die Betriebsmodi der Windenergieanlage möglich ist. Ein Zugriff außerhalb geplanter Vermessungszeiträume ist somit erst möglich, wenn über die Programmierschnittstelle das Windenergieanlagenschnittstellenmodul wieder hierfür freigeschaltet, nämlich aktiviert, wird.

Gemäß einer Ausführungsform ist die Programmierschnittstelle direkt oder über die Windenergieanlagensteuerung mit einer weiteren Datenverbindung der Windenergieanlage, die nicht der Datenverbindung zwischen Windenergieanlagenschnittstellenmodul und Teilnehmermodul entspricht, verbindbar. Diese weitere Datenverbindung der Windenergieanlage ist beispielsweise eine gesicherte Datenverbindung mit einem Windparkregler oder eine Internetverbindung der Windenergieanlage, auf die nur der Betreiber der Windenergieanlage zugreifen kann. Demnach kann ein Personenkreis, der beispielsweise Zugriff auf einen Windparkregler eines Windparks, in dem die Windenergieanlage angeordnet ist, oder der über eine Internetverbindung einen gesicherten Zugriff auf die Windenergieanlage hat, über die Programmierschnittstelle des Windenergieanlagenschnittstellenmoduls Änderungen, insbesondere einer Programmausführung in der Rechnereinheit, ausführen. Demnach sind beispielsweise vom Windparkregler oder über die Internetverbindung die auswählbaren Betriebsmodi vordefinierbar oder änderbar, das Windenergieanlagenschnittstellenmodul aktivierbar oder deaktivierbar oder ein Zeitraum für eine Aktivierung bereitstellbar.

Ein Windenergieanlagenbetreiber, der beispielsweise Zugriff aus der Ferne auf die Windenergieanlage hat, kann somit über diese Programmierschnittstelle die Teilnehmerschnittstelle oder die Auswahl benötigter Betriebsdaten ändern und somit eine geplante Vermessung aus der Ferne unterstützen oder überhaupt erst durch Aktivierung bereitstellen. Der Servicemitarbeiter des Windenergieanlagenbetreibers muss für derartige Tätigkeiten somit nicht zum Ort der Windenergieanlage anreisen.

Gemäß einerweiteren Ausführungsform sind die Programmierschnittstelle und die Teilnehmerschnittstelle physikalisch voneinander getrennte Schnittstellen. Durch eine physikalische Trennung der Schnittstellen wird sichergestellt, dass, da eine Programmierung nur über die Programmierschnittstelle möglich ist, durch ein mit der Teilnehmerschnittstelle verbundenes Teilnehmermodul nicht die Programmierung, nämlich beispielsweise die auswählbaren Betriebsmodi, änderbar ist. Dies stellt einen weiteren Sicherheitsaspekt dar, um einen Missbrauch durch ein Teilnehmermodul zu verhindern.

Weiterhin betrifft die Erfindung eine Windenergieanlage mit einem Windenergieanlagenschnittstellenmodul nach einer der vorhergehenden Ausführungsformen, das mit einer Windenergieanlagensteuerung der Windenergieanlage verbunden ist.

Nicht beansprucht ist ein Teilnehmermodul mit einer Windenergieanlagenschnittstellenmodulschnittstelle. Die Windenergieanlagenschnittstellenmodulschnittstelle dient zum Verbinden des Teilnehmermoduls mit einer Teilnehmerschnittstelle eines Windenergieanlagenschnittstellenmoduls nach einer der vorgenannten Ausführungsformen oder einer Windenergieanlage mit einem Windenergieanlagenschnittstellenmodul nach einer der vorgenannten Ausführungsformen.

Gemäß einer Ausführungsform des Teilnehmermoduls ist das Teilnehmermodul mit einer Versorgungsspannung von 12 V oder 24 V betreibbar. Hierdurch wird sichergestellt, dass das Teilnehmermodul über einen längeren Zeitraum mit einer herkömmlichen Fahrzeugbatterie betrieben werden kann. Ein Messinstitut fährt üblicherweise zu einer Windenergieanlage mit einem Fahrzeug und führt dort die hier betreffenden Messungen aus dem Fahrzeug heraus durch. Dieses Fahrzeug, nämlich insbesondere die Fahrzeugbatterie des Fahrzeugs kann dann zum Bereitstellen der Versorgungsspannung verwendet werden.

Besonders bevorzugt umfasst das Teilnehmermodul einen Stecker, der mit einer Bordspannungssteckdose, die auch Automobilsteckdose genannt werden kann, des Fahrzeugs verbindbar ist.

Zusätzlich oder alternativ ist das Teilnehmermodul mit einem Versorgungsstrom von weniger als 1 A, vorzugsweise weniger als 800 mA oder besonders bevorzugt weniger als 600 mA, betreibbar. Somit ist sichergestellt, dass insbesondere, wenn das Teilnehmermodul mit einer Fahrzeugbatterie betrieben wird, auch über einen längeren Zeitraum von mehreren Stunden, die eine Messung andauern kann, das Teilnehmermodul durch eine Fahrzeugbatterie betreibbar ist, ohne dass eine zu starke Entladung der Fahrzeugbatterie erfolgt.

Gemäß einer weiteren Ausführungsform des Teilnehmermoduls umfasst das Teilnehmermodul mindestens einen digitalen Datenausgang und/oder mindestens einen analogen Datenausgang. Der digitale Datenausgang dient beispielsweise zur Ausgabe aller vom Teilnehmermodul empfangenen Betriebsdaten. Diese werden beispielsweise mit einem Rechner, insbesondere Laptop, gespeichert und später weiterverarbeitet. Vorzugsweise sind mehrere analoge Datenausgänge, insbesondere mindestens vier oder sechs analoge Datenausgänge bereitgestellt. Ein analoger Datenausgang gibt hierbei ein elektrisches Signal mit einer Stromstärke oder einer Spannung aus, die stellvertretend für einen Wert bestimmter Betriebsdaten ist. Der Wert variiert zwischen einem vorgegebenen Minimalwert, beispielsweise 0 V, und einem vorgegebenen Maximalwert, beispielsweise 10 V.

Besonders bevorzugt dient ein erster analoger Datenausgang zur Ausgabe der von der Windenergieanlage als Betriebsdaten gemessenen Windgeschwindigkeit. Ein zweiter analoger Datenausgang dient zur Darstellung der aktuellen Leistung der Windenergieanlage. Ein dritter analoger Datenausgang dient zur Anzeige der aktuellen Drehzahl der Windenergieanlage und ein vierter analoger Datenausgang dient zur Anzeige der Gondelposition. Zusätzlich kann ein fünfter analoger Datenausgang vorgesehen sein, der den Hauptstatus der Windenergieanlage darstellt und ein sechster analoger Datenausgang, der einen Zusatzstatus der Windenergieanlage ausgibt. Ein Hauptstatus zeigt beispielsweise an, ob die Windenergieanlage in einem normalen Betrieb betrieben wird oder, ob die Windenergieanlage gestoppt ist. Ein Zusatzstatus zeigt beispielsweise an, ob die Windenergieanlage in einem bestimmten Betriebsmodus, wie beispielsweise einem geräuschreduzierten Betrieb betrieben wird. Die Ausgabe der Betriebsdaten und Betriebsmodi mit einem digitalen Datenausgang dient zur einfachen Weiterverarbeitung der Daten nach einer Zwischenspeicherung, wohingegen zusätzlich oder alternativ die Ausgabe der Betriebsdaten und Betriebsmodi mit analogen Datenausgängen dient, um beispielsweise unmittelbar eine Dokumentationsvorrichtung, insbesondere einen Drucker oder dergleichen anzuschließen und so die Betriebsmodi und Betriebsdaten in Form von Kurven kontinuierlich darzustellen.

Gemäß einer weiteren Ausführungsform umfasst das Teilnehmermodul einen Prozessor und einen Bildschirm. Der Bildschirm ist vorzugsweise ein berührungsempfindlicher Bildschirm. Der Prozessor ist eingerichtet, empfangene Betriebsdaten auszuwählen und auf dem Bildschirm anzuzeigen. Weiter ist der Prozessor zusätzlich oder alternativ eingerichtet, die ausgewählten Betriebsdaten über den mindestens einen analogen Datenausgang auszugeben. Alternativ kann auch eine weitere Auswahl der empfangenen Betriebsdaten durch den Prozessor ausgeführt werden und über den analogen Datenausgang die weitere Auswahl der empfangenen Betriebsdaten ausgegeben werden. Zudem ist der Prozessor eingerichtet, auswählbare Betriebsmodi zur Auswahl auf dem Bildschirm darzustellen. Hierbei sind insbesondere alle auswählbaren Betriebsmodi jeweils als Auswahlelement, vorzugsweise als Icon, auf dem Bildschirm darstellbar. Das Teilnehmermodul kann somit auch autark ohne nachgeschalteten Computer oder Auswerteinrichtung, wie beispielsweise einen Drucker, zur Auswertung der Betriebsdaten und Auswahl der Betriebsmodi verwendet werden.

Gemäß einer weiteren Ausführungsform umfasst das Teilnehmermodul ein Funkmodul, das insbesondere ein WLAN-Modul ist. Das Funkmodul dient zum Empfangen der Betriebsdaten und/oder zum Senden der Betriebsmodi. Das Funkmodul weist eine interne Schnittstelle des Teilnehmermoduls auf, mit der die empfangenen Betriebsdaten mit einem CAN-Protokoll zur Weiterverarbeitung im Teilnehmermodul bereitgestellt werden. Beispielsweise können diese als Ausgangssignal am digitalen Datenausgang bereitgestellt werden.

Außerdem umfasst das Teilnehmermodul mindestens einen Digital-Analog-Wandler mit dem Betriebsdaten gemäß CAN-Protokoll, beispielsweise die Windgeschwindigkeit, die Leistung, die Drehzahl, die Gondelposition, der Hauptstatus und/oder der Zusatzstatus, extrahiert werden können, wobei diese dann jeweils als analoges Signal auszugeben sind.

Zu Auswahl, welche der Betriebsdaten mit einem Digital-Analog-Wandler ausgegeben werden, ist der Prozessor vorzugsweise über einen I²C-Bus mit dem oder den Digital-Analog-Wandlern verbunden und kann diese entsprechend ansteuern.

Somit wird beispielsweise ein erster Digital-Analog-Wandler derart angesteuert, dass er aus dem über die interne Schnittstelle bereitgestellten CAN-Protokoll nur die Betriebsdaten bezogen auf die Windgeschwindigkeit extrahiert und als Analogsignal ausgibt, das dann einem ersten analogen Datenausgang zur Ausgabe als analoges Signal bereitgestellt wird. Entsprechend extrahiert ein zweiter Digital-Analog-Wandler beispielsweise die Betriebsdaten, die auf die Leistung bezogen sind und gibt diese als analoges Signal aus. Entsprechend werden die weiteren Betriebsdaten in weiteren Digital-Analog-Wandlern extrahiert und ausgegeben. Ein besonders einfacher Aufbau des Teilnehmermoduls ist so möglich.

Gemäß einer weiteren Ausführungsform umfasst das Teilnehmermodul einen vordefinierten Identifikator zum Identifizieren des Teilnehmermoduls durch ein Windenergieanlagenschnittstellenmodul. Hierdurch kann sichergestellt werden, dass ein Teilnehmermodul mit einem Identifikator, der im Windenergieanlagenschnittstellenmodul hinterlegt, also vordefiniert, ist, Daten austauschen kann, während ein Teilnehmermodul mit einem Identifikator, der nicht im Windenergieanlagenschnittstellenmodul hinterlegt ist, keine Daten, insbesondere zum Ändern des Betriebsmodus der Windenergieanlage, mit dem Windenergieanlagenschnittstellenmodul austauschen kann.

Außerdem betrifft die Erfindung ein System mit einem Windenergieanlagenschnittstellenmodul nach einer der vorgenannten Ausführungsformen und einem Teilnehmermodul nach einer der vorgenannten Ausführungsformen, wobei das Teilnehmermodul einen vordefinierten Identifikator zum Identifizieren des Teilnehmermoduls durch ein Windenergieanlagenschnittstellenmodul aufweist.

Weiterhin betrifft die Erfindung ein Verfahren zur Vermessung, insbesondere Schallvermessung, einer Windenergieanlage mit einem Windenergieanlagenschnittstellenmodul nach einer der vorgenannten Ausführungsformen, und einem Teilnehmermodul, insbesondere nach einer der vorgenannten Ausführungsformen. Das Verfahren umfasst das Anordnen eines Teilnehmermoduls an einem Ort außerhalb einer zu vermessenden Windenergieanlage und das Verbinden des Teilnehmermoduls mit einer Teilnehmerschnittstelle eines innerhalb der Windenergieanlage angeordneten Windenergieanlagenschnittstellenmoduls. Außerdem umfasst das Verfahren das Senden von Daten vom Teilnehmermodul an das Windenergieanlagenschnittstellenmodul zum Auswählen eines von mehreren vordefinierten auswählbaren Betriebsmodus der Windenergieanlage.

Gemäß der Erfindung umfasst das Verbinden des Teilnehmermoduls mit einer Teilnehmerschnittstelle des Windenergieanlagenschnittstellenmoduls das Senden eines Identifikators des Teilnehmermoduls und das Empfangen des Identifikators vom Windenergieanlagenschnittstellenmodul. Weiter umfasst das Verfahren das Vergleichen des empfangenen Identifikators mit einem oder mehreren in dem Windenergieanlagenschnittstellenmodul hinterlegten Identifikatoren und das Herstellen der Verbindung zur Auswahl der Betriebsmodi nur im Falle einer Übereinstimmung und Versagen der Verbindung anderenfalls.

Gemäß einer weiteren Ausführungsform umfasst das Verfahren das Ausgeben von angeforderten Betriebsdaten einer Auswahl von einer Vielzahl von Betriebsdaten der Windenergieanlage an das Teilnehmermodul durch das Windenergieanlagenschnittstellenmodul.

Gemäß einer weiteren Ausführungsform des Verfahrens werden vor dem Verbinden eines Teilnehmermoduls mit einer Teilnehmerschnittstelle des Windenergieanlagenschnittstellenmoduls mehrere auswählbare Betriebsmodi im Windenergieanlagenschnittstellenmodul vordefiniert oder vordefinierte ausgewählte Betriebsmodi geändert. Zusätzlich oder alternativ wird die Teilnehmerschnittstelle aktiviert oder ein Zeitraum, der insbesondere von der Uhrzeit abhängig ist, für eine Aktivierung der Teilnehmerschnittstelle über eine Programmierschnittstelle vordefiniert. Alternativ oder zusätzlich wird vor dem Verbinden eine Auswahl einer Vielzahl von Betriebsdaten vordefiniert, die über die Teilnehmerschnittstelle abrufbar ist.

Weitere Ausführungsformen ergeben sich anhand der in den Figuren näher erläuterten Ausführungsbeispiele. In den Figuren zeigen
- Fig. 1: eine Windenergieanlage,
- Fig. 2: eine Ausführungsform des Windenergieanlagenschnittstellenmoduls sowie des Teilnehmermoduls und
- Fig. 3: ein Ausführungsbeispiel des Verfahrens.

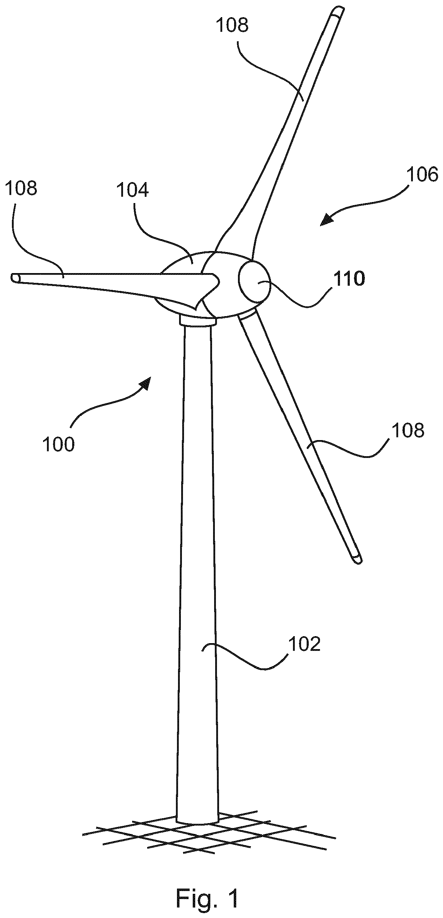

Fig. 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

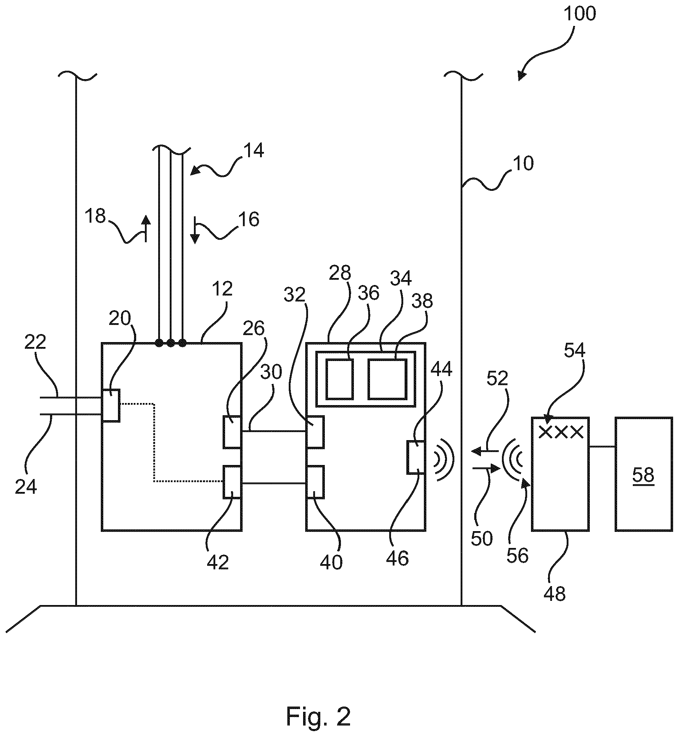

Fig. 2 zeigt exemplarisch einen Schnitt durch einen Turmfuß 10 einer Windenergieanlage 100. Im Inneren der Windenergieanlage 100 ist eine Windenergieanlagensteuerung 12 dargestellt. Die Windenergieanlagensteuerung 12 ist über Datenleitungen 14 mit nicht dargestellten Sensoren verbunden und empfängt über die Datenleitung 14 Betriebsdaten 16, die beispielsweise Sensordaten der Sensoren enthalten. Weiter sind über die Datenleitungen 14 weitere Komponenten der Windenergieanlage 100, wie beispielsweise ein nicht dargestellter Wechselrichter sowie der Generator, verbunden, um diese mittels Steuersignalen 18 anzusteuern. Die Steuersignale 18 werden in der Windenergieanlagensteuerung 12 beispielsweise in Abhängigkeit von Betriebsdaten 16, wie beispielsweise der Sensordaten, und einem aktuell ausgewählten Betriebsmodus erzeugt. Demnach wird mit der Windenergieanlagensteuerung 12 ein Betriebsmodus, beispielsweise in Abhängigkeit einer Betriebskennlinie, insbesondere einer Leistungsdrehzahlkennlinie, gewählt und entsprechend die Steuersignale 18 erzeugt.

Vorzugsweise wird die Windenergieanlage 100 mit der Windenergieanlagensteuerung 12 in einem Standardbetriebsmodus betrieben, der bei gegebenen Windverhältnissen unter Berücksichtigung von weiteren Faktoren, wie Verschleiß und Stabilität der Windenergieanlage, eine optimale elektrische Leistung erzeugt.

Die Windenergieanlagensteuerung 12 weist zudem eine Fernzugriffsschnittstelle 20 auf, die beispielsweise eine Internetverbindung 22 oder eine Verbindung 24 mit einem die Windenergieanlage 100 steuernden Windparkregler bereitstellt. Über die Fernzugriffsschnittstelle 20 können beispielsweise Betriebsmodi geändert werden, wenn beispielsweise nicht der Standardbetriebsmodus ausgeführt werden soll und die Windenergieanlage 100 in einem reduzierten Betrieb eine reduzierte elektrische Leistung erzeugen soll. Außerdem sind über die Fernzugriffsschnittstelle 20 die Betriebsdaten 16 abrufbar. Insbesondere, wenn die Fernzugriffsschnittstelle 20 mit einem Windparkregler verbunden ist, ist eine Datenverbindung über die Fernzugriffsschnittstelle 20 zwar verschlüsselt und gesichert, aber gewährleistet dem Windparkregler im Wesentlichen einen vollen Zugriff auf die Steuerung sowie die Daten der Windenergieanlage 100. Ein Zugriff auf die Fernzugriffsschnittstelle 20 ist demnach nur durch den Windenergieanlagenbetreiber oder Windenergieanlagenhersteller selbst möglich und vorgesehen.

Weiter weist die Windenergieanlagensteuerung 12 eine Schnittstelle 26 auf, an der ebenfalls Betriebsdaten 16 zur Verfügung stehen und auch Betriebsmodi einstellbar sind. Diese Schnittstelle 26 der Windenergieanlagensteuerung 12 dient vorzugsweise zum Anschluss eines Servicecomputers eines Servicemitarbeiters des Windenergieanlagenbetreibers, beispielsweise für die Wartung der Windenergieanlage 100. Diese Schnittstelle 26 der Windenergieanlagensteuerung 12 bietet ebenfalls im Wesentlichen einen uneingeschränkten Zugriff auf die Steuerung der Windenergieanlage 100, kann jedoch aus Sicherheitsgründen nur von Personen erreicht werden, die Zugang zum verschlossenen Turmfuß haben.

Mit der Schnittstelle 26 ist nun ein in der Windenergieanlage 100 angeordnetes Windenergieanlagenschnittstellenmodul 28 verbunden, wobei das Windenergieanlagenschnittstellenmodul 28 zum Bereitstellen einer Datenverbindung 30 mit der Schnittstelle 26 der Windenergieanlagensteuerung 12 eine Windenergieanlagensteuerungsschnittstelle 32 aufweist. Außerdem umfasst das Windenergieanlagenschnittstellenmodul 28 eine Rechnereinheit 34 mit einem Prozessor 36 und einem Programmspeicher 38. Der Programmspeicher 38 dient beispielsweise, um den Programmcode des Prozessors 36 bereitzustellen, der dann Daten über die Windenergieanlagensteuerungsschnittstelle 32 an die Windenergieanlagensteuerung 12 sendet und von dieser empfängt. Der Speicher 38 kann umprogrammiert werden, wobei dies ausschließlich über eine Programmierschnittstelle 40 möglich ist. Die Programmierschnittstelle 40 ist hierzu mit der Windenergieanlagensteuerung 12 über eine weitere Schnittstelle 42 der Windenergieanlagensteuerung 12 und weiter auch mit der Fernzugriffsschnittstelle 20 verbunden. Die Programmierschnittstelle 40 sowie die Windenergieanlagensteuerungsschnittstelle 32 können gemäß einem anderen Ausführungsbeispiel auch als gemeinsame physikalische Verbindung ausgebildet sein. Vorzugsweise ist es auch vorgesehen, dass die Windenergieanlagensteuerung 12 über die Fernzugriffsschnittstelle 20 keine komplette Umprogrammierung des Speichers 38 des Windenergieanlagenschnittstellenmoduls 28, sondern nur eine eingeschränkte Programmierung erlaubt.

Weiterhin umfasst das Windenergieanlagenschnittstellenmodul 28 eine Teilnehmerschnittstelle 44, die einer Funkschnittstelle 46 entspricht. Die Teilnehmerschnittstelle 44 ist mit einem Teilnehmermodul 48 zum Datenaustausch verbindbar. Dank der Ausbildung der Teilnehmerschnittstelle 44 als Funkschnittstelle 46 kann das Teilnehmermodul 48 sich außerhalb der Windenergieanlage 100, also außerhalb des Turmfußes 10, befinden und Daten mit dem Windenergieanlagenschnittstellenmodul 28 austauschen. So lassen sich vom Teilnehmermodul 48 mittels der Windenergieanlagenschnittstelle bereitgestellte Betriebsdaten 50 empfangen und durch das Windenergieanlagenschnittstellenmodul 28 bereitgestellte vordefinierte auswählbare Betriebsmodi 52 auswählen. Das Teilnehmermodul 48 weist einen nicht veränderbaren Identifikationscode 54 auf, um das Teilnehmermodul 48 durch das Windenergieanlagenschnittstellenmodul 28 zu identifizieren und nur im Falle einer erfolgreichen Identifikation die Verbindung 56 mittels der Teilnehmerschnittstelle 44 herzustellen, um ausgewählte Betriebsdaten 50 zu empfangen oder vordefinierte Betriebsmodi 52 auszuwählen Das Teilnehmermodul 48 ist hier beispielsweise als Slave des als Master ausgebildeten Windenergieanlagenschnittstellenmoduls 28 ausgebildet.

Das Teilnehmermodul 48 ist besonders bevorzugt an einen Computer 58 anschließbar, um gesteuert durch den Computer 58 mit dem Teilnehmermodul 48 Betriebsmodi 52 auszuwählen und Betriebsdaten 16 auszuwerten. Gemäß einem weiteren, hier nicht dargestellten, Ausführungsbeispiel ist die Teilnehmerschnittstelle 44 Bestandteil des Computers 58. Gemäß dem hier dargestellten Ausführungsbeispiel ist das Teilnehmermodul 48 jedoch lösbar mit einem Computer 58, beispielsweise über eine Kabelverbindung, insbesondere eine USB-Kabelverbindung, verbindbar und es kann ein beliebiger Computer 58 zur Kommunikation mit dem Teilnehmermodul 48 eingesetzt werden. Das Teilnehmermodul 48 wird demnach unabhängig von einem Computer 58 bereitgestellt.

Gemäß einem besonderen Ausführungsbeispiel ist ebenfalls das Windenergieanlagenschnittstellenmodul 28 als lösbar mit der Windenergieanlagensteuerung 12 verbindbares Modul ausgebildet und kann nach einer Benutzung von der Windenergieanlagensteuerung 12 entfernt werden, um in einer anderen Windenergieanlage 100 eingesetzt zu werden. Besonders bevorzugt werden für eine Vermessung an einer bestimmten Windenergieanlage 100 jeweils ein System, bestehend aus einem Windenergieanlagenschnittstellenmodul 20 sowie einem Teilnehmermodul 48, die sich über einen Identifikator zum Datenaustausch miteinander verbinden lassen, bereitgestellt.

Durch den Computer 58 sowie das Teilnehmermodul 48 kann nun während einer Vermessung von außerhalb der Windenergieanlage 100 der Betriebsmodus 52 der Windenergieanlage 100 geändert werden und gleichzeitig Betriebsdaten 50 von der Windenergieanlage 100 zur Auswertung empfangen werden.

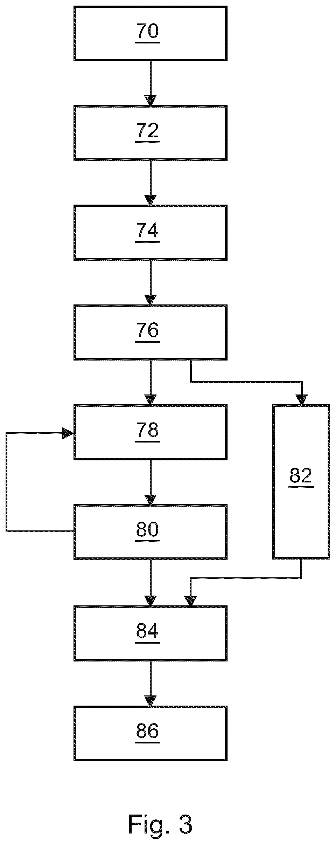

Fig. 3 zeigt die Schritte eines Ausführungsbeispiels des Verfahrens. In einem Schritt 70 wird das Windenergieanlagenschnittstellenmodul 28 über die Programmierschnittstelle 40 programmiert. Hierbei werden auswählbare Betriebsmodi 52 der Windenergieanlage 100 vordefiniert, eine Auswahl von Betriebsdaten 50 bereitgestellt, die über die Teilnehmerschnittstelle 44 ausgebbar sind, und es wird ein Zeitraum vordefiniert, an dem das Windenergieanlagenschnittstellenmodul 28 zum Austausch von Daten mit dem Teilnehmerschnittstellenmodul 44 aktiviert wird. Daraufhin wird in einem Schritt 72 ein Teilnehmermodul 48 außerhalb der Windenergieanlage 100 bereitgestellt und im Schritt 74 eine Identifikation des Teilnehmermoduls 48 durch das Windenergieanlagenschnittstellenmodul 28 durchgeführt. Daraufhin wird das Teilnehmermodul 48 in einem Schritt 76 mit dem Windenergieanlagenschnittstellenmodul 28 zum Empfang von Betriebsmodi 52 verbunden.

Im Schritt 78 wird dann ein vom aktuellen Betriebsmodus 52 unterschiedlicher Betriebsmodus über das Teilnehmermodul 48 ausgewählt und an die Teilnehmerschnittstelle 44 übertragen. Dieser Betriebsmodus 52 wird dann der Windenergieanlagensteuerung 12 zugeführt und die Windenergieanlage 100 mit diesem Betriebsmodus 52 betrieben. Im Schritt 80 werden Daten, insbesondere Schalldaten, der Windenergieanlage 100 gemessen. Daraufhin kann erneut in den Schritt 78 zurückgegangen werden und ein neuer Betriebsmodus 52 eingestellt werden, woraufhin weitere Daten gemessen werden. Parallel zu den Schritten 78 und 80 werden in einem Schritt 82 Betriebsdaten 52 vom Windenergieanlagenschnittstellenmodul 28 an das Teilnehmermodul 48 übertragen. Im Schritt 84 ist das Verfahren dann beendet und eine Schallvermessung durchgeführt. Entweder über die Fernzugriffsschnittstelle 20 und dann über die Programmierschnittstelle 40 des Windenergieanlagenschnittstellenmoduls 28 oder nach Ablauf des Zeitraums wird im Schritt 86 ein Zugriff auf das Windenergieanlagenschnittstellenmodul 28 über die Teilnehmerschnittstelle 44 deaktiviert.

## Patentansprüche

1. Windenergieanlagenschnittstellenmodul zum Betreiben einer Windenergieanlage (100) während einer Vermessung, insbesondere Schallvermessung, umfassend:
- eine Windenergieanlagensteuerungsschnittstelle (32) zum Verbinden mit einer Windenergieanlagensteuerung (12),
- eine Rechnereinheit (34) mit mehreren vordefinierten auswählbaren Betriebsmodi (52) der Windenergieanlage (100), die eingerichtet ist, einen ausgewählten Betriebsmodus (52) der auswählbaren Betriebsmodi (52) an der Windenergieanlagensteuerungsschnittstelle (32) auszugeben und
- eine Teilnehmerschnittstelle (44) zum Verbinden mit einem Teilnehmermodul (48) und zum Empfangen von Daten vom verbundenen Teilnehmermodul (48) zur Auswahl mindestens eines der auswählbaren Betriebsmodi (52), wobei die Teilnehmerschnittstelle (44) derart ausgebildet ist, dass eine Verbindung der Teilnehmerschnittstelle (44) mit einem Teilnehmermodul (48) von einem Ort außerhalb der Windenergieanlage (100) herstellbar ist, in der das Windenergieanlagenschnittstellenmodul (28) anordenbar ist,
wobei in dem Windenergieanlagenschnittstellenmodul (28), insbesondere der Rechnereinheit (34) des Windenergieanlagenschnittstellenmoduls (28), mindestens ein Identifikator eines identifizierbaren Teilnehmermoduls (48) vordefinierbar ist, und das Windenergieanlagenschnittstellenmodul (28) eingerichtet ist, Daten zum Auswählen eines Betriebsmodus (52) nur mit einem durch den Identifikator des Teilnehmermoduls (48) identifizierten der vordefinierten identifizierbaren Teilnehmermodule (48) zu empfangen und/oder auszuführen,
wobei das Windenergieanlagenschnittstellenmodul (28) eine Programmierschnittstelle (40) umfasst zum
- Aktivieren oder Deaktivieren des Windenergieanlagenschnittstellenmoduls (28), insbesondere der Teilnehmerschnittstelle (44), oder
- Vorgeben eines, insbesondere von der Uhrzeit abhängigen, Zeitraums für eine Aktivierung der Teilnehmerschnittstelle (44).

2. Windenergieanlagenschnittstellenmodul nach Anspruch 1, wobei
die Teilnehmerschnittstelle (44) eine Drahtlosschnittstelle umfasst, die vorzugsweise eine WLAN-Schnittstelle ist und besonders bevorzugt eine Verbindung mit einem Teilnehmermodul (48) ermöglicht, das mindestens 50, 70 oder 100 Meter vom Windenergieanlagenschnittstellenmodul (28) entfernt ist und/oder eine Verbindung mit dem Teilnehmermodul (48) zum Teilnehmerschnittstellenmodul (44) oberhalb einer Entfernung von 200, 300 oder 500 Metern vom Windenergieanlagenschnittstellenmodul (28) verhindert, und/oder
die Teilnehmerschnittstelle (44) eine Kabelverbindung mit einem an einer Außenseite einer Windenergieanlage (100) anbringbaren Steckverbinder umfasst.

3. Windenergieanlagenschnittstellenmodul nach Anspruch 1 oder 2, wobei die Windenergieanlagensteuerungsschnittstelle (32) eingerichtet ist, eine Vielzahl von Betriebsdaten (16) zu empfangen, und in der Rechnereinheit (34) eine Auswahl der empfangbaren Betriebsdaten (50) vordefinierbar ist, die über die Teilnehmerschnittstelle (44) vom Teilnehmermodul (48) abrufbar ist.

4. Windenergieanlagenschnittstellenmodul nach einem der vorhergehenden Ansprüche, wobei die Programmierschnittstelle (40) direkt oder über die Windenergieanlagensteuerung (12) mit einer Datenverbindung (24) der Windenergieanlage (100) mit einem Windparkregler oder einer Internetverbindung (22) der Windenergieanlage (100) verbindbar ist.

5. Windenergieanlagenschnittstellenmodul nach einem der vorhergehenden Ansprüche, wobei die Programmierschnittstelle (40) und die Teilnehmerschnittstelle (44) physikalisch voneinander getrennt sind.

6. Windenergieanlage mit einem Windenergieanlagenschnittstellenmodul (28) nach einem der Ansprüche 1 bis 5 und einer Windenergieanlagensteuerung (12), wobei das Windenergieanlagenschnittstellenmodul (28) über eine Windenergieanlagensteuerungsschnittstelle (32) mit der Windenergieanlagensteuerung (12) verbunden ist.

7. System mit einem Windenergieanlagenschnittstellenmodul nach einem der Ansprüche 1 bis 5 oder einer Windenergieanlage nach Anspruch 6 und einem Teilnehmermodul mit einer Windenergieanlagenschnittstellenmodulschnittstelle zum Verbinden mit der Teilnehmerschnittstelle (44) des Windenergieanlagenschnittstellenmoduls (28) nach einem der Ansprüche 1 bis 5 oder der Windenergieanlage (100) nach Anspruch 6, wobei das Teilnehmermodul (48) einen vordefinierten Identifikator zum Identifizieren des Teilnehmermoduls (48) durch das Windenergieanlagenschnittstellenmodul (28) aufweist.

8. System nach Anspruch 7, wobei das Teilnehmermodul (48) mit einer Versorgungsspannung von 12 V oder 24 V und/oder einem Versorgungsstrom von weniger als 1 A, vorzugsweise weniger als 800 mA, besonders bevorzugt weniger als 600 mA, betreibbar ist.

9. System nach Anspruch 7 oder 8, wobei das Teilnehmernehmermodul (48) mindestens einen digitalen Datenausgang und/oder mindestens einen analogen Datenausgang, insbesondere mindestens vier oder sechs analoge Datenausgänge, zur Ausgabe von von der Teilnehmerschnittstelle (44) empfangener Betriebsdaten (50) und/oder des ausgewählten Betriebsmodus (52) umfasst.

10. System nach einem der Ansprüche 7 bis 9, wobei das Teilnehmermodul (48) einen Prozessor und einen Bildschirm, insbesondere einen berührungsempfindlichen Bildschirm, aufweist, wobei der Prozessor eingerichtet ist, empfangene Betriebsdaten (50) auszuwählen und auf dem Bildschirm anzuzeigen und/oder die ausgewählten Betriebsdaten (50) über den mindestens einen analogen Datenausgang auszugeben und/oder eine weitere Auswahl der empfangenen Betriebsdaten (50) auszuführen und die weitere Auswahl der empfangenen Betriebsdaten (50) über den analogen Datenausgang auszugeben und/oder, insbesondere alle, auswählbaren Betriebsmodi (52) zur Auswahl auf dem Bildschirm darzustellen.

11. System nach einem der Ansprüche 7 bis 10, wobei das Teilnehmermodul (48) ein Funkmodul, insbesondere ein WLAN-Modul, zum Empfangen der Betriebsdaten (50) und/oder zum Senden der Betriebsmodi (52) aufweist, wobei das Funkmodul die empfangenen Betriebsdaten (50) an einer internen Schnittstelle des Teilnehmermoduls (48) mit einem CAN-Protokoll zur Weiterverarbeitung im Teilnehmermodul (48) bereitstellt und das Teilnehmermodul (48) ferner mindestens einen Digital-Analog-Wandler aufweist, um aus den im CAN-Protokoll bereitgestellten Betriebsdaten (50) ein oder mehrere analoge Ausgangssignale für den mindestens einen analogen Ausgang bereitzustellen, wobei vorzugsweise der Prozessor zur Auswahl der Betriebsdaten (50), die über einen analogen Ausgang ausgegeben und hierzu aus dem CAN-Protokoll extrahiert werden sollen, eingerichtet ist, den mindestens einen Digital-Analog-Wandler, insbesondere über einen I²C-Bus, anzusteuern.

12. Verfahren zur Vermessung, insbesondere Schallvermessung, einer Windenergieanlage (100) mit einem Windenergieanlagenschnittstellenmodul (28) nach einem der Ansprüche 1 bis 5 und einem Teilnehmermodul (48), umfassend die Schritte:
- Anordnen des Teilnehmermoduls (48) außerhalb der zu vermessenden Windenergieanlage (100),
- Verbinden des Teilnehmermoduls (48) mit der Teilnehmerschnittstelle (44) des Windenergieanlagenschnittstellenmoduls (28) und
- Senden von Daten an das innerhalb der Windenergieanlage (100) angeordnete Windenergieanlagenschnittstellenmodul (28) vom Teilnehmermodul (48) zur Auswahl eines von mehreren im Windenergieanlagenschnittstellenmodul (28) vordefinierten auswählbaren Betriebsmodus (52) der Windenergieanlage (100),
wobei das Verbinden des Teilnehmermoduls (48) mit dem Windenergieanlagenschnittstellenmodul (28) das Senden eines Identifikators des Teilnehmermoduls (48), das Vergleichen des Identifikators mit einem in dem Windenergieanlagenschnittstellenmodul (28) vordefinierten Identifikator und das Herstellen der Verbindung im Falle einer Übereinstimmung oder Versagen der Verbindung anderenfalls umfasst,
wobei optional vorgesehen ist, dass das Teilnehmermodul eine Windenergieanlagenschnittstellenmodulschnittstelle zum Verbinden mit der Teilnehmerschnittstelle des Windenergieanlagenschnittstellenmoduls umfasst,
wobei bei der Ausführung des Teilnehmermoduls mit der Windenergieanlagenschnittstellenmodulschnittstelle optional vorgesehen ist,
- dass das Teilnehmermodul mit einer Versorgungsspannung von 12 V oder 24 V und/oder einem Versorgungsstrom von weniger als 1 A, vorzugsweise weniger als 800 mA, besonders bevorzugt weniger als 600 mA, betreibbar ist, und/oder
- dass das Teilnehmermodul mindestens einen digitalen Datenausgang und/oder mindestens einen analogen Datenausgang, insbesondere mindestens vier oder sechs analoge Datenausgänge, zur Ausgabe von von der Teilnehmerschnittstelle empfangener Betriebsdaten und/oder des ausgewählten Betriebsmodus umfasst, und/oder
- dass das Teilnehmermodul einen Prozessor und einen Bildschirm, insbesondere einen berührungsempfindlichen Bildschirm, aufweist, wobei der Prozessor eingerichtet ist, empfangene Betriebsdaten auszuwählen und auf dem Bildschirm anzuzeigen und/oder die ausgewählten Betriebsdaten über den mindestens einen analogen Datenausgang auszugeben und/oder eine weitere Auswahl der empfangenen Betriebsdaten auszuführen und die weitere Auswahl der empfangenen Betriebsdaten über den analogen Datenausgang auszugeben und/oder, insbesondere alle, auswählbaren Betriebsmodi zur Auswahl auf dem Bildschirm darzustellen, und/ oder
- dass das Teilnehmermodul ein Funkmodul, insbesondere ein WLAN-Modul, zum Empfangen der Betriebsdaten und/oder zum Senden der Betriebsmodi aufweist, wobei das Funkmodul die empfangenen Betriebsdaten an einer internen Schnittstelle des Teilnehmermoduls mit einem CAN-Protokoll zur Weiterverarbeitung im Teilnehmermodul bereitstellt und das Teilnehmermodul ferner mindestens einen Digital-Analog-Wandler aufweist, um aus den im CAN-Protokoll bereitgestellten Betriebsdaten ein oder mehrere analoge Ausgangssignale für den mindestens einen analogen Ausgang bereitzustellen, wobei vorzugsweise der Prozessor zur Auswahl der Betriebsdaten, die über einen analogen Ausgang ausgegeben und hierzu aus dem CAN-Protokoll extrahiert werden sollen, eingerichtet ist, den mindestens einen Digital-Analog-Wandler, insbesondere über einen 12C-Bus, anzusteuern.

13. Verfahren nach Anspruch 12, wobei eine Vermessung, insbesondere Schallvermessung, vor und nach dem Übertragen der Daten vom Teilnehmermodul (48) an das Windenergieanlagenschnittstellenmodul (28) durchgeführt wird.

14. Verfahren nach Anspruch 12 oder 13, wobei mit dem Teilnehmermodul (48) eine Anforderung von Betriebsdaten (16) der Windenergieanlage (100) an das Windenergieanlagenschnittstellenmodul (28) erfolgt und das Windenergieanlagenschnittstellenmodul (28) die angeforderten Betriebsdaten (50) an das Teilnehmermodul (48) überträgt, wenn diese in einer vordefinierten Auswahl von Betriebsdaten (50) enthalten sind und/oder
wobei vor dem Verbinden über eine Programmierschnittstelle (40) des Windenergieanlagenschnittstellenmoduls (28) auswählbare Betriebsmodi (52) der Windenergieanlage (100) im Windenergieanlagenschnittstellenmodul (28) vordefiniert werden und/oder die Teilnehmerschnittstelle (44) aktiviert wird oder ein, insbesondere von der Uhrzeit abhängiger, Zeitraum für eine Aktivierung der Teilnehmerschnittstelle (44) vordefiniert wird und/oder eine Auswahl von über die Teilnehmerschnittstelle (44) ausgebbaren Betriebsdaten (50) vordefiniert wird.

## Claims

1. Wind turbine interface module for operating a wind turbine (100) during a survey, in particular sound survey, comprising:
- a wind turbine control interface (32) for connecting to a wind turbine controller (12),
- a computer unit (34) having a plurality of predefined selectable operating modes (52) of the wind turbine (100), the computer unit (34) being arranged to output a selected one of the selectable operating modes (52) to the wind turbine control interface (32); and
- a subscriber interface (44) for connecting to a subscriber module (48) and for receiving data from the connected subscriber module (48) for selecting at least one of the selectable operating modes (52), wherein the subscriber interface (44) is configured such that a connection of the subscriber interface (44) to a subscriber module (48) can be established from a location outside the wind turbine (100) in which the wind turbine interface module (28) is arrangeable,
wherein at least one identifier of an identifiable subscriber module (48) is predefinable in the wind turbine interface module (28), in particular in the computer unit (34) of the wind turbine interface module (28), and the wind turbine interface module (28) is arranged to receive and/or execute data for selecting an operating mode (52) only with one of the predefined identifiable subscriber modules (48) identified by the identifier of the subscriber module (48),
wherein said wind turbine interface module (28) comprises a programming interface (40) for
- activating or deactivating the wind turbine interface module (28), in particular the subscriber interface (44), or
- specifying a time period for activation of the subscriber interface (44), in particular depending on the time of day.

2. Wind turbine interface module of claim 1, wherein
the subscriber interface (44) comprises a wireless interface which is preferably a WLAN interface and particularly preferably enables a connection to a subscriber module (48) which is at least 50, 70 or 100 meters away from the wind turbine interface module (28) and/or prevents a connection with the subscriber module (48) to the subscriber interface module (44) above a distance of 200, 300 or 500 meters from the wind turbine interface module (28), and/or
the subscriber interface (44) comprises a cable connection to a connector attachable to an exterior of a wind turbine (100).

3. Wind turbine interface module according to claim 1 or 2, wherein the wind turbine control interface (32) is arranged to receive a plurality of operational data (16), and a selection of the receivable operational data (50) retrievable from the subscriber module (48) via the subscriber interface (44) is predefinable in the computer unit (34).

4. Wind turbine interface module according to any one of the preceding claims, wherein the programming interface (40) is connectable directly or via the wind turbine controller (12) to a data link (24) of the wind turbine (100) to a wind farm controller or an internet connection (22) of the wind turbine (100).

5. Wind turbine interface module according to any of the preceding claims, wherein the programming interface (40) and the subscriber interface (44) are physically separated from each other.

6. Wind turbine comprising a wind turbine interface module (28) according to any one of claims 1 to 5 and a wind turbine controller (12), wherein the wind turbine interface module (28) is connected to the wind turbine controller (12) via a wind turbine controller interface (32).

7. System comprising a wind turbine interface module according to any one of claims 1 to 5 or a wind turbine according to claim 6, and a subscriber module comprising a wind turbine interface module interface for connecting to the subscriber interface (44) of the wind turbine interface module (28) according to any one of claims 1 to 5 or the wind turbine (100) according to claim 6,
wherein the subscriber module (48) comprises a predefined identifier for identifying the subscriber module (48) by the wind turbine interface module (28).

8. System according to claim 7, wherein the subscriber module (48) is operable with a supply voltage of 12 V or 24 V and/or a supply current of less than 1 A, preferably less than 800 mA, more preferably less than 600 mA.

9. System according to claim 7 or 8, wherein the subscriber module (48) comprises at least one digital data output and/or at least one analog data output, in particular at least four or six analog data outputs, for outputting operating data (50) received from the subscriber interface (44) and/or the selected operating mode (52).

10. System according to any one of claims 7 to 9, wherein the subscriber module (48) comprises a processor and a display screen, in particular a touch-sensitive display screen, wherein the processor is set up to select received operating data (50) and display it on the display screen and/or to output the selected operating data (50) via the at least one analog data output and/or to execute a further selection of the received operating data (50) and to output the further selection of the received operating data (50) via the analog data output and/or to display, in particular all, selectable operating modes (52) for selection on the display screen.

11. System according to any one of claims 7 to 10, wherein the subscriber module (48) comprises a radio module, in particular a WLAN module, for receiving the operating data (50) and/or for transmitting the operating modes (52), wherein the radio module provides the received operating data (50) at an internal interface of the subscriber module (48) with a CAN protocol for further processing in the subscriber module (48) and the subscriber module (48) further comprises at least one digital-to-analog converter, in order to provide one or more analog output signals for the at least one analog output from the operating data (50) provided in the CAN protocol, the processor for selecting the operating data (50) which is to be output via an analog output and extracted from the CAN protocol for this purpose preferably being set up to drive the at least one digital-to-analog converter, in particular via an I²C-bus.

12. Method for surveying, in particular sound surveying, a wind turbine (100) with a wind turbine interface module (28) according to one of claims 1 to 5 and a subscriber module (48), comprising the steps:
- placing the subscriber module (48) outside the wind turbine (100) to be surveyed,
- connecting the subscriber module (48) to the subscriber interface (44) of the wind turbine interface module (28); and
- sending data to the wind turbine interface module (28) disposed within the wind turbine (100) from the subscriber module (48) to select one of a plurality of selectable operating modes (52) of the wind turbine (100) predefined in the wind turbine interface module (28),
wherein connecting the subscriber module (48) to the wind turbine interface module (28) comprises sending an identifier of the subscriber module (48), comparing the identifier to an identifier predefined in the wind turbine interface module (28), and establishing the connection in the event of a match or refuse the connection otherwise,
wherein optionally the subscriber module comprises a wind turbine interface module interface for connecting to the subscriber interface of the wind turbine interface module,
wherein in the embodiment of the subscriber module having the wind turbine interface module interface is optionally provided,
- that the subscriber module can be operated with a supply voltage of 12 V or 24 V and/or a supply current of less than 1 A, preferably less than 800 mA, particularly preferably less than 600 mA, and/or
- that the subscriber module comprises at least one digital data output and/or at least one analog data output, in particular at least four or six analog data outputs, for outputting operating data received from the subscriber interface and/or the selected operating mode, and/or
- that the subscriber module has a processor and a screen, in particular a touch-sensitive screen, the processor being set up to select received operating data and to display it on the screen and/or to output the selected operating data via the at least one analog data output and/or to execute a further selection of the received operating data and to output the further selection of the received operating data via the analog data output and/or, in particular to display all, selectable operating modes for selection on the screen, and/or
- that the subscriber module has a radio module, in particular a WLAN module, for receiving the operating data and/or for transmitting the operating modes, the radio module providing the received operating data at an internal interface of the subscriber module with a CAN protocol for further processing in the subscriber module, and the subscriber module furthermore having at least one digital-to-analog converter, in order to provide one or more analog output signals for the at least one analog output from the operating data provided in the CAN protocol, the processor for selecting the operating data which is to be output via an analog output and extracted from the CAN protocol for this purpose preferably being set up to drive the at least one digital-to-analog converter, in particular via a I²C-bus.

13. Method according to claim 12, wherein a survey, in particular sound survey, is performed before and after the transmission of the data from the subscriber module (48) to the wind turbine interface module (28).

14. Method according to claim 12 or 13, wherein a request for operating data (16) of the wind turbine (100) to the wind turbine interface module (28) is made with the subscriber module (48) and the wind turbine interface module (28) transmits the requested operating data (50) to the subscriber module (48) if it is included in a predefined selection of operating data (50) and/or
wherein, prior to connection via a programming interface (40) of the wind turbine interface module (28), selectable operating modes (52) of the wind turbine (100) are predefined in the wind turbine interface module (28) and/or the subscriber interface (44) is activated or a time period, in particular dependent on the time, for an activation of the subscriber interface (44) is predefined and/or a selection of operating data (50) which can be output via the subscriber interface (44) is predefined.

## Revendications

1. Module d'interface d'éolienne destiné à faire fonctionner une éolienne (100) pendant une mesure, en particulier une mesure acoustique, comprenant :
- une interface de commande d'éolienne (32) destinée à être reliée à une commande d'éolienne (12),
- une unité de calcul (34) avec plusieurs modes de fonctionnement (52) de l'éolienne (100) prédéfinis sélectionnables, qui est mise au point pour fournir un mode de fonctionnement (52) sélectionné des modes de fonctionnement (52) sélectionnables à l'interface de commande d'éolienne (32), et
- une interface d'abonné (44) destinée à être reliée à un module d'abonné (48) et destinée à recevoir des données du module d'abonné (48) relié pour sélectionner au moins un des modes de fonctionnement (52) sélectionnables, dans lequel l'interface d'abonné (44) est réalisée de telle manière qu'une connexion de l'interface d'abonné (44) à un module d'abonné (48) peut être établie depuis un site à l'extérieur de l'éolienne (100), dans laquelle le module d'interface d'éolienne (28) peut être disposé,
dans lequel au moins un identifiant d'un module d'abonné (48) identifiable peut être prédéfini dans le module d'interface d'éolienne (28), en particulier l'unité de calcul (34) du module d'interface d'éolienne (28), et le module d'interface d'éolienne (28) est mis au point pour recevoir et/ou exécuter des données pour sélectionner un mode de fonctionnement (52) seulement avec un module d'abonné, identifié par l'identifiant du module d'abonné (48), des modules d'abonné (48) identifiables prédéfinis,
dans lequel le module d'interface d'éolienne (28) comprend une interface de programmation (40) pour
- activer ou désactiver le module d'interface d'éolienne (28), en particulier l'interface d'abonné (44), ou
- spécifier un moment, dépendant de l'heure, pour une activation de l'interface d'abonné (44).

2. Module d'interface d'éolienne selon la revendication 1, dans lequel
l'interface d'abonné (44) comprend une interface sans fil, qui est de préférence une interface WLAN et permet de manière particulièrement préférée une connexion à un module d'abonné (48), qui est éloigné d'au moins 50, 70 ou 100 mètres du module d'interface d'éolienne (28) et/ou empêche une connexion au module d'abonné (48) avec le module d'interface d'abonné (44) au-delà d'un éloignement de 200, 300 ou 500 mètres du module d'interface d'éolienne (28), et/ou
l'interface d'abonné (44) comprend une connexion de câble à un connecteur enfichable pouvant être installé sur un côté extérieur d'une éolienne (100).

3. Module d'interface d'éolienne selon la revendication 1 ou 2, dans lequel l'interface de commande d'éolienne (32) est mise au point pour recevoir une pluralité de données de fonctionnement (16), et peut être définie, dans l'unité de calcul (34), une sélection des données de fonctionnement (50) pouvant être reçues, qui peut être consultée par le module d'abonné (48) par l'intermédiaire de l'interface d'abonné (44).

4. Module d'interface d'éolienne selon l'une quelconque des revendications précédentes, dans lequel l'interface de programmation (40) peut être connectée, directement ou par l'intermédiaire de la commande d'éolienne (12), par une connexion de données (24) de l'éolienne (100) à un régulateur de parc éolien ou une connexion Internet (22) de l'éolienne (100).

5. Module d'interface d'éolienne selon l'une quelconque des revendications précédentes, dans lequel l'interface de programmation (40) et l'interface d'abonné (44) sont séparées l'une de l'autre physiquement.

6. Eolienne avec un module d'interface d'éolienne (28) selon l'une quelconque des revendications 1 à 5 et une commande d'éolienne (12), dans laquelle le module d'interface d'éolienne (28) est connecté à la commande d'éolienne (12) par l'intermédiaire d'une interface de commande d'éolienne (32).

7. Système avec un module d'interface d'éolienne selon l'une quelconque des revendications 1 à 5 ou une éolienne selon la revendication 6 et un module d'abonné avec une interface de module d'interface d'éolienne destiné à être connecté à l'interface d'abonné (44) du module d'interface d'éolienne (28) selon l'une quelconque des revendications 1 à 5 ou de l'éolienne (100) selon la revendication 6,
dans lequel le module d'abonné (48) présente un identifiant prédéfini destiné à identifier le module d'abonné (48) par le module d'interface d'éolienne (28).

8. Système selon la revendication 7, dans lequel le module d'abonné (48) peut fonctionner avec une tension d'alimentation de 12 V ou de 24 V et/ou avec un courant d'alimentation inférieur à 1 A, de préférence inférieur à 800 mA, de manière particulièrement préférée inférieur à 600 mA.

9. Système selon la revendication 7 ou 8, dans lequel le module d'abonné (48) comprend au moins une sortie de données numérique et/ou au moins une sortie de données analogique, en particulier au moins 4 ou 6 sorties de données analogiques, pour fournir des données de fonctionnement (50) reçues de l'interface d'abonné (44) et/ou le mode de fonctionnement (52) sélectionné.

10. Système selon l'une quelconque des revendications 7 à 9, dans lequel le module d'abonné (48) présente un processeur et un écran, en particulier un écran tactile, dans lequel le processeur est mis au point pour sélectionner des données de fonctionnement (50) reçues et les afficher sur l'écran et/ou pour fournir les données de fonctionnement (50) sélectionnées par l'intermédiaire de l'au moins une sortie de données analogiques et/ou pour exécuter une autre sélection des données de fonctionnement (50) reçues et/ou pour fournir l'autre sélection des données de fonctionnement (50) reçues par l'intermédiaire de la sortie de données analogiques et/ou pour afficher sur l'écran en particulier tous les modes de fonctionnement (52) sélectionnables à sélectionner.

11. Système selon l'une quelconque des revendications 7 à 10, dans lequel le module d'abonné (48) présente un module radio, en particulier un module WLAN, destiné à recevoir les données de fonctionnement (50) et/ou destiné à envoyer les modes de fonctionnement (52), dans lequel le module radio fournit les données de fonctionnement (50) reçues sur une interface interne du module d'abonné (48) avec un protocole CAN pour le traitement ultérieur dans le module d'abonné (48) et le module d'abonné (48) présente en outre au moins un convertisseur numérique-analogique pour fournir, à partir des données de fonctionnement (50) fournies dans le protocole CAN, un ou plusieurs signaux de sortie analogiques pour l'au moins une sortie analogique, dans lequel de préférence le processeur est mis au point pour sélectionner les données de fonctionnement (50), qui doivent être envoyées par l'intermédiaire d'une sortie analogique et doivent être extraites à cet effet du protocole CAN, pour piloter l'au moins un convertisseur numérique-analogique, en particulier par l'intermédiaire d'un bus I²C.

12. Procédé de mesure, en particulier de mesure acoustique, d'une éolienne (100) avec un module d'interface d'éolienne (28) selon l'une quelconque des revendications 1 à 5 et un module d'abonné (48), comprenant les étapes :
- d'agencement du module d'abonné (48) à l'extérieur de l'éolienne (100) à mesurer,
- de connexion du module d'abonné (48) à l'interface d'abonné (44) du module d'interface d'éolienne (28) et
- d'envoi de données au module d'interface d'éolienne (28) disposé à l'intérieur de l'éolienne (100) par le module d'abonné (48) pour sélectionner un ou plusieurs modes de fonctionnement (52) sélectionnables, prédéfinis dans le module d'interface d'éolienne (28), de l'éolienne (100),
dans lequel la connexion du module d'abonné (48) au module d'interface d'éolienne (28) comprend l'envoi d'un identifiant du module d'abonné (48), la comparaison de l'identifiant à un identifiant prédéfini dans le module d'interface d'éolienne (28) et l'établissement de la connexion dans la cas d'une concordance ou l'échec de la connexion dans le cas contraire,
dans lequel il est prévu en option que le module d'abonné comprend une interface de module d'interface d'éolienne destinée à être connectée à l'interface d'abonné du module d'interface d'éolienne,
dans lequel lors de l'exécution du module d'abonné avec l'interface de module d'interface d'éolienne, il est prévu en option
- que le module d'abonné peut fonctionner avec une tension d'alimentation de 12 V ou de 24 V et/ou avec un courant d'alimentation inférieur à 1 A, de préférence inférieur à 800 mA, de manière particulièrement préférée inférieur à 600 mA, et/ou
- que le module d'abonné comprend au moins une sortie de données numérique et/ou au moins une sortie de données analogique, en particulier au moins 4 ou 6 sorties de données analogiques, pour fournir des données de fonctionnement reçues de l'interface d'abonné et/ou le mode de fonctionnement sélectionné, et/ou
- que le module d'abonné présente un processeur et un écran, en particulier un écran tactile, dans lequel le processeur est mis au point pour sélectionner des données de fonctionnement reçues et les afficher sur l'écran et/ou pour fournir les données de fonctionnement sélectionnées par l'intermédiaire de l'au moins une sortie de données analogique, et/ou pour exécuter une autre sélection des données de fonctionnement reçues et fournir l'autre sélection des données de fonctionnement reçues par l'intermédiaire de la sortie de données analogique, et/ou en particulier pour afficher sur l'écran tous les modes de fonctionnement sélectionnables à sélectionner et/ou
- que le module d'abonné présente un module radio, en particulier un module WLAN, destiné à recevoir les données de fonctionnement et/ou destiné à envoyer les modes de fonctionnement, dans lequel le module radio met à disposition les données de fonctionnement reçues sur une interface interne du module d'abonné avec un protocole CAN pour le traitement ultérieur dans le module d'abonné et le module d'abonné présente en outre au moins un convertisseur numérique-analogique pour mettre à disposition parmi les données de fonctionnement mises à disposition dans le protocole CAN un ou plusieurs signaux de sortie analogiques pour l'au moins une sortie analogique, dans lequel de préférence le processeur est mis au point pour sélectionner les données de fonctionnement, qui doivent être fournies par l'intermédiaire d'une sortie analogique et qui doivent à cet effet être extraites du protocole CAN pour piloter l'au moins un convertisseur numérique-analogique, en particulier par l'intermédiaire d'un bus 12C.

13. Procédé selon la revendication 12,
dans lequel une mesure, en particulier une mesure acoustique, est mise en œuvre avant et après la transmission des données du module d'abonné (48) au module d'interface d'éolienne (28).

14. Procédé selon la revendication 12 ou 13, dans lequel une demande de données de fonctionnement (16) de l'éolienne (100) au module d'interface d'éolienne (28) est effectuée avec le module d'abonné (48) et le module d'interface d'éolienne (28) transmet les données de fonctionnement (50) demandées au module d'abonné (48) lorsque celles-ci sont contenues dans une sélection prédéfinie de données de fonctionnement (50) et/ou
dans lequel des modes de fonctionnement (52) sélectionnables de l'éolienne (100) sont prédéfinis dans le module d'interface d'éolienne (28) avant la connexion par l'intermédiaire d'une interface de programmation (40) du module d'interface d'éolienne (28) et/ou l'interface d'abonné (44) est activée ou un moment dépendant en particulier de l'heure est prédéfini pour une activation de l'interface d'abonné (44) et/ou pour une sélection de données de fonctionnement (50) pouvant être fournies par l'intermédiaire de l'interface d'abonné (44).
